# EUROPÄISCHE PATENTSCHRIFT

(11) **EP 3 710 417 B1**
(45) Veröffentlichungstag und Bekanntmachung des Hinweises auf die Patenterteilung: **06.04.2022**
(21) Anmeldenummer: 18803628.9
(22) Anmeldetag: 13.11.2018
(51) Int. Cl.: C07B 37/02

(54) **ORGANOLITHIUMPROZESS UNTER KONTINUIERLICHEN FLUSSBEDINGUNGEN**
ORGANOLITHIUM PROCESS UNDER CONTINUOUS FLOW CONDITIONS
PROCÉDÉ FAISANT INTERVENIR DE L'ORGANOLITHIUM DANS DES CONDITIONS DE FLUX EN CONTINU

(30) Priorität: 14.11.2017 DE 102017010643
(43) Veröffentlichungstag der Anmeldung: 23.09.2020
(73) Patentinhaber: Albemarle Germany GmbH, 65926 Frankfurt am Main (DE)
(72) Erfinder: SCHNIPPERING, Stefan, 53721 Siegburg (DE); WIETELMANN, Ulrich, 61381 Friedrichsdorf (DE); NIKBIN, Nikzad, Cambridge Cambridgeshire CB2 9LW (GB); TARVER, Gary John, Stevenage Hertfordshire SG2 LW (GB)
(74) Vertreter: Uexküll & Stolberg
(86) Internationale Anmeldenummer: PCT/EP2018/081017
(87) Internationale Veröffentlichungsnummer: WO 2019/096762

(56) Entgegenhaltungen:
- EP-A1- 1 956 023
- WO-A1-2016/049509

## Beschreibung

Die Erfindung betrifft Verfahren zur CC-Bindungsbildung unter Verwendung von Organolithiumverbindungen unter kontinuierlichen Flußbedingungen in einem Mikro- oder Mesoreaktorsystem.

Organometallische Spezies der 1. Hauptgruppe, insbesondere Organolithium-Verbindungen, sind unverzichtbare Werkzeuge für die organische Synthese, da sie als Carbanionäquivalente dienen und direkt oder indirekt für diverse Kohlenstoff-Kohlenstoff-(CC)-Verknüpfungsreaktionen eingesetzt werden können. Die wichtigsten Reaktionen sind Additionen an ungesättigte funktionelle Gruppen, z.B. 1,2-Additionen an Carbonylverbindungen oder Kohlenstoff-Stickstoff (CN)-Doppel- und Dreifachbindungen; Deprotonierungsreaktionen sowie Halogen/Metall-Austauschreaktionen. Ferner werden Organolithiumverbindungen für Ummetallierungen (z.B. Herstellung von Organozink- oder Organokupferverbindungen) und für Übergangsmetall-katalysierte CC-Kupplungsreaktionen verwendet. Diese Reaktionen sind seit langem bekannt und in entsprechenden Lehrbüchern zusammengefasst (B. J. Wakefield, "Organolithium Methods", Academic Press London, 1988 etc).

Organolithiumverbindungen RLi mit R = Alkylgruppe mit 2 - 12 C-Atomen werden aufgrund ihrer guten Löslichkeit und Stabilität bevorzugt als Lösungen in Kohlenwasserstoffen produziert und eingesetzt. Viele solcher Organolithiumprodukte, beispielsweise die Butyllithiumisomere n-Butyllithium, sec-Butyllithium und tert-Butyllithium sowie Hexyllithium und Octyllithium, sind im industriellen Maßstab als Lösungen in Hexan, Heptan, Cyclohexan, Toluol u.ä. erhältlich. Allen diesen Lösungen ist gemein, dass sie kein Donorlösemittel, wie beispielsweise einen Ether oder ein Amin, enthalten. Lithiumalkyle sind zwar in solchen Donorverbindungen sehr gut löslich, jedoch weisen diese Mischungen nur eine unbefriedigende thermische Stabilität auf. So zersetzt sich Butyllithium bei 0 °C in THF mit einer Halbwertszeit von 23,5 h. Die Zersetzung erfolgt unter Bildung von Ethylen und dem Enolat des Acetaldehyds:

C₄H₈O + C₄H₉Li → H₂C=CH₂ + LiO-CH=CH₂ + C₄H₁₀

Donorlösemittel sind aber für viele Reaktionen mit RLi-Verbindungen unabkömmlich, da sie die Reaktivität und Selektivität positiv beeinflussen können. Butyllithium liegt in Kohlenwasserstoffen im Wesentlichen als hexameres Aggregat vor. Durch Zugabe von THF werden diese Aggregate gebrochen und es bilden sich deutlich reaktivere dimere und trimere Spezies.

Wenn eine solche Reaktionsbeschleunigung durch Donorlösemittel notwendig ist, werden letztere in der Regel nur *in situ* verwendet, d.h. sie werden erst mit dem für die jeweilige Reaktion verwendeten Substrat zugegeben. Die Reaktionstemperatur wird so gewählt, dass die gewünschte Reaktion wesentlich schneller verläuft als der Angriff auf das Donorlösungsmittel. Viele Reaktionen unter Verwendung von Organolithiumverbindungen werden bei tiefen Temperaturen (häufig im Temperaturbereich zwischen -100 und 0 °C) durchgeführt. Es ist bekannt, dass beispielsweise Brom/Lithium-Austauschreaktionen in Gegenwart von THF oder Diethylether bei -78 °C sehr schnell ablaufen, so dass die Nebenreaktion -der Angriff auf das Lösungsmittel- keine Rolle spielt. Organolithiumverbindungen, ganz überwiegend n-Butyllithium und Hexyllithium, werden in zunehmendem Maße in kontinuierlichen Prozessen in Mikro- und Mesoreaktoren ("Flow-Prozessen") eingesetzt. Hinter diesem Trend stehen vor allem Sicherheitsüberlegungen, da Organolithiumverbindungen hochreaktiv sind und sich an Luft entzünden können. Des Weiteren sind Einsparungen durch Prozeßintensivierung und geringeren

Energieverbrauch möglich, da aufgrund der dramatisch verbesserten Mischbedingungen, der schnelleren Wärmeabfuhr und der dadurch realisier- und steuerbaren, meist geringeren Verweilzeiten, Reaktionen häufig bei höheren (nicht-kryogenen) Temperaturen durchgeführt werden können, als dies beim klassischen Batch-Prozeß der Fall ist. Für einen Überblick: siehe A. Nagaki und J.-I. Yoshida, Top. Organomet. Chem. (2016) 57, 137-76. In der Regel werden die standardmäßig verfügbaren Organolithiumreagenzien als verdünnte Hexan-Lösungen mit einer Konzentration zwischen 1,5 und 2,5 M (M = Mol/L; 15 - 23 Gew.-%ig im Falle von Butyllithium) eingesetzt (s. US2016/0090361A1).

Die im Vergleich zu Batchreaktoren wesentlich höheren spezifischen Oberflächen von Flow-Reaktoren und die geringen Durchmesser ihrer Kanalstrukturen bringen bei Reaktionen mit Butyllithium jedoch auch Nachteile mit sich. So werden häufig Flußminderungen und Verstopfungen, sogenanntes "Reaktorfouling" beobachtet. Diese Phänomene werden auf unterschiedliche Ursachen, beispielsweise das Ausfällen von Salzen allgemein bzw. speziell Lithiumhydroxid zurückgeführt (S. Laue, V. Haverkamp, L. Mleczko, Org. Proc. Res. Dev. 2016, 20, 480-6). Diese Phänomene bewirken, dass Flow-Reaktionen nicht über längere Zeit stabil laufen können, so dass immer wieder Reinigungszyklen zwischengeschaltet werden müssen. Dadurch werden die prinzipiellen Vorteile einer kontinuierlichen Reaktionsführung konterkariert.

Weiterhin fallen häufig auch die Reaktionsausbeuten gegenüber der Batchfahrweise unter analogen Reaktionsbedingungen niedriger aus.

EP 0 956 023 A1 offenbart ein Verfahren zur Durchführung von Lithiumaustauschreaktionen bei dnen ein Lithiumaustauschreagenz wie beispielsweise Phenyllithium, Methyllithium, n-Butyllithium, tert.-Butyllithium oder n-Hexyllithium verwendet wird.

Es ist eine Verfahrensweise gesucht, die die Nachteile des Stands der Technik vermeidet, d.h. die beim Einsatz von Organolithiumverbindungen bei kontinuierlicher Reaktionsführung (Flow-Reaktionen)
- Feststoffausfällungen und Reaktorfouling verhindert und
- mindestens gleichwertige Reaktionsausbeuten im Vergleich zur Batchfahrweise ermöglicht.

Erfindungsgemäß wird die Aufgabe gelöst, indem für CC-Bindungsbildungverfahren unter kontinuierlichen Flußbedingungen in einem Mikro- oder Mesoreaktorsystem ein organisches Substrat in Gegenwart eines Donorlösungsmittels mit einer Organolithiumverbindung zu einem Li-Intermediat umgesetzt wird, welches *in situ* oder anschließend in einem zweiten Reaktionssschritt mit einem Elektrophil zu einem organischen Folgeprodukt reagiert werden kann und wobei die Organolithiumverbindung RLi als Lösung in einem Kohlenwasserstoff oder Kohlenwasserstoffgemisch eingesetzt wird und die RLi-Konzentration mindestens 3 M, bevorzugt mindestens 4 M beträgt.

Die Nachteile des Standes der Technik werden durch den Einsatz höherkonzentrierter Organolithiumverbindungen in einem Kohlenwasserstoff-basierten Lösungsmittel überwunden. Vorzugsweise wird eine RLi-Konzentration von mindestens 3 M, besonders bevorzugt von mindestens 4 M eingesetzt. Dies entspricht im Falle von Butyllithium Konzentrationen von mindestens 27 bzw. mindestens 36 Gew.-%, im Falle von Hexyllithium mindestens 39 bzw. mindestens 53 Gew.-%.

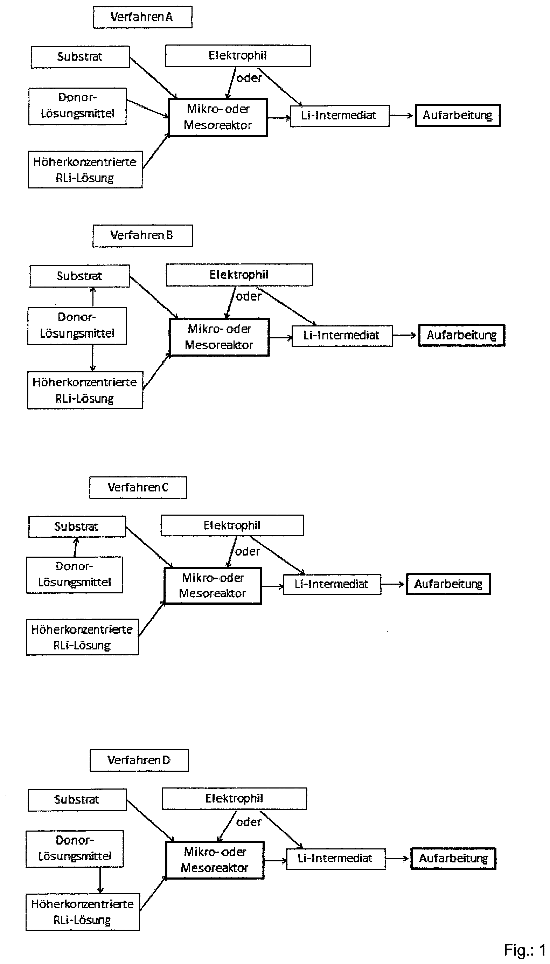

Das erfindungsgemäße Verfahren sieht weiterhin eine gegenüber dem etablierten Stand der Technik konzentriertere Butyllithiumlösung in Kohlenwasserstofflösungsmitteln und das Substrat sowie ein oder mehrere Donorlösungsmittel vor. Diese sind ausgewählt aus der Gruppe Ether, Amine, Sulfoxide, Phosphortriamide und ähnlich funktionalisierten Stoffen. Alle genannten Komponenten werden in einem Flow-Mikro- oder Mesoreaktor zusammengeführt und vermischt. Die erfindungsgemäßen Reaktionen sind z.B. Additions-, Deprotonierungs- oder Halogen/Lithium-Austauschreaktionen und das entstehende LithiumIntermediat kann mit einem Elektrophil in bekannter Art und Weise umgesetzt werden. Je nach Reaktionssystem kann das Elektrophil zusammen (das heißt als homogene Mischung) oder parallel dosiert oder erst nach Bildung des Lithiumintermediats dem Reaktionssystem zugeführt werden. Der Zusatz des Donorlösungsmittels kann gemäß der VerfahrensVarianten A bis D erfolgen (Fig. 1). Bei Verfahren A wird das Donorlösungsmittel getrennt in das Reaktormodul gepumpt; bei Verfahren B wird es in zwei Mischmodulen sowohl mit der höherkonzentrierten RLi-Lösung als auch mit dem Substrat gemischt, bei Verfahren C wird das Donorlösungsmittel nur dem Substrat und bei Verfahren D wird das Donorlösungsmittel nur die höherkonzentrierte RLi-Lösung beigemischt.

Reaktoren für kleinskalige Konti-Verfahren werden je nach ihrer Dimensionierung, d.h. dem Durchmesser ihrer Kanalstrukturen, als Mikroreaktoren (Kanalstrukturen < 1 mm) bzw. Mesoreaktoren (Kanalstrukturen > 1 mm bis in den cm-Bereich) bezeichnet. Sie sind von diversen Anbietern, beispielsweise Corning Glass, Vapourtec, dem Fraunhofer-ICT-IMM oder Ehrfeld Mikrotechnik erhältlich.

Durch die Verwendung höherkonzentrierter RLi-Lösungen wird der Eintrag von Kohlenwasserstofflösungsmitteln in das Reaktionssystem vermindert, d.h. das Gewichtsverhältnis von Donorlösungsmittel : Kohlenwasserstoff wird erhöht. Es wurde überraschend gefunden, dass durch diese Maßnahme im Allgemeinen die Tendenz zur Feststoffbildung gemindert wird, d.h. die kontinuierliche Reaktion kann über längere Zeit betrieben werden, ohne dass ein Reinigungs-/Spülzyklus eingeschoben werden muß. Der Gewichtsanteil von Kohlenwasserstofflösungsmitteln (ohne Berücksichtigung des aus der Organolithiumverbindung RLi bei der Reaktion gegebenenfalls gebildeten Alkans RH bzw. Halogenids R-Hal (Hal = Cl, Br oder I)) im Reaktionsgemisch nach Vereinigung aller Komponenten (also Organolithiumlösung, Donorlösungsmittel, Substrat und gegebenfalls Elektrophil) und vor Aufarbeitung beispielsweise durch Hydrolyse beträgt maximal 11 Gew.-%, besonders bevorzugt maximal 8 Gew.-%.

Zusätzlich werden im Allgemeinen gegenüber der Batchfahrweise erhöhte Ausbeuten beobachtet. Überraschenderweise wird aber kein linearer Effekt beobachtet, sondern ein Optimum bei einer bestimmten RLi-Konzentration. Die genaue Lage dieses Optimums ist von der jeweiligen Reaktion und den verwendeten individuellen Substanzen abhängig. Im Allgemeinen liegt das Optimum der RLi-Konzentration im Falle von Butyllithium im Bereich zwischen etwa 3 M und 8 M (26 bis 75 Gew.-%), besonders bevorzugt zwischen 3,5 und 7 M (32 bis 64 Gew.-%).

Als Substrate dienen Stoffe, die mit Organolithiumverbindungen in Abhängigkeit vom beabsichtigten Reaktionstyp reagieren können. Im Falle einer Deprotonierung handelt es sich bevorzugt um CH-acide Verbindungen, d.h. Substanzen, deren Acididät höher ist als diejenige von aliphatischen CH-Verbindungen, also beispielsweise Aromaten oder Heteroaromaten mit einer dirigierenden funktionellen Gruppe. Für die Halogen/Lithium-Austauschreaktion werden Substanzen enthaltend einen Halogenliganden, wobei lodid und Bromid bevorzugt sind, gebunden an ein aromatisches oder heteroaromatisches Gerüstsystem, bevorzugt. Die halogenierten Aromaten oder Heteroaromaten können eine oder mehrere funktionelle Gruppen besitzen, auswählt aus der Gruppe bestehend aus: F, Cl, Br, CN, CO₂R, OR, OH, NR₂, NHR, NH₂, PR₂, P(O)R₂, CONR₂, CONHR, SR, SH, CF₃, NO₂.

Als Donorlösungsmittel werden aus der Gruppe von Ethern folgende Verbindungen bevorzugt eingesetzt: Dimethylether, Diethylether, Dibutylether, Cyclopentylmethylether, Methyl-tert-butylether, Methyl-tert-amylether; Tetrahydrofuran, 2-Methyltetrahydrofuran, Tetrahydropyran; 4-Methyl-tetrahydropyran; 1,2-Dimethoxymethan sowie höhere Glymes; von Aminen folgende Verbindungen bevorzugt eingesetzt: Ammoniak, Trimethylamin, Triethylamin, Tributylamin, Tetramethylethylendiamin (TMEDA), Bis(2-dimethylaminoethyl)methylamin (PMDTA), sowie weiterhin Hexamethylphosphorsäuretriamid (HMPA), Dimethylsulfoxid (DMSO), N-Methyl-2-pyrrolidon (NMP), Dimethylacetamid (DMAC), 1,3-Dimethyl-3,4,5,6-tetrahydro-2(1H)-pyrimidinon (DMPU).

Das höherkonzentrierte Organolithiumreagenz wird als eine Lösung in einem Kohlenwasserstofflösemittel eingesetzt. Das Kohlenwasserstofflösungsmittel enthält bevorzugt Hexane, Heptane, Octane, Toluol, Ethylbenzol, Cumol und/oder Xylole.

Im Falle von Deprotonierungen oder Halogen/Lithium-Austauschreaktionen wird das Lithiumintermediat mit einem Elektrophil umgesetzt, wobei das Elektrophil ausgewählt ist aus Carbonylverbindungen (Aldehyde, Ketone, Carbonsäureester, Carbonsäureamide), Nitrilen, Iminen, Halogenen, Halogenverbindungen, Disulfiden, Wasser.

### Beispiele

Die Erfindung wird anhand folgender Beispiele erläutert.

### Allgemeines

Alle Reaktionen wurden in einem Flow-Reaktorsystem (4-Pumpen R2/R4) der Firma Vapourtec durchgeführt. Die Chemikalien wurden ohne weitere Reinigung von Sigma Aldrich bezogen. Höherkonzentrierte Butyllithiumlösungen wurden von Albemarle beigestellt.

### Beispiel 1:

### Regioselektive Deprotonierung von N-Methylpyrazol mit Butyllithium und anschließende Umsetzung mit einem Boronat-Elektrophil

Die Reaktion gemäß: 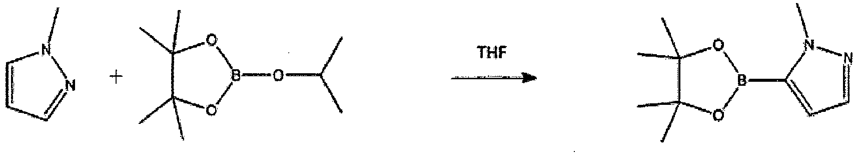 wurde im Batch-Modus mit 1,6 M Butyllithiumlösung in Hexan bei -5°C durchgeführt. Nach Umsetzung mit Isopropoxypinakolborat bei -78 °C und Erwärmen auf Raumtemperatur wurde die borylierte Spezies mit einer Ausbeute von 51 % erhalten (WO2007/120729A2, S. 62).

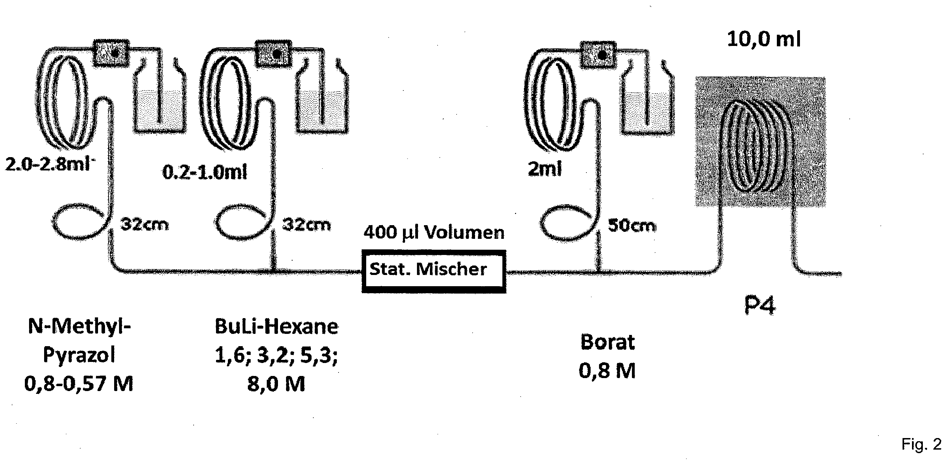

Dieselbe Reaktion wurde im Flow-Modus untersucht. Der Versuchsaufbau ist in der Abbildung (Fig. 2) dargestellt:
Die Startmaterialien Butyllithium (BuLi) und das N-Methylpyrazol (Pyrazol) als 0,8 M Lösung in THF wurden in Schlauchschleifen (loops) vorgelegt und mittels Pumpen in einem statischen Mischer mit einem Volumen von 400 µl homogen vermengt. Zu diesem Produktstrom wurde das Isopropoxypinakolborat (Boronat) aus einem weiteren loop, ebenfalls als 0,8 M Lösung in THF, bei Raumtemperatur dosiert. Der vereinigte Produktstrom wurde in einem Verweilzeitmodul P4 mit einem Volumen von 10 ml nachreagieren gelassen. Die Verweilzeit in P4 betrug ca. 5 Minuten.

Die Reaktionslösung wurde sauer gequencht, aufgearbeitet und NMR-spektroskopisch unter Verwendung eines internen Standards untersucht. Die Ergebnisse werden in der folgenden Tabelle festgehalten:

| **Experiment Nummer** | **Loop** | **Start-Material** | **Konzentration (Mol/l)** | **Loop size/ml** | **Ausbeute (%)** | **Gew% Hexan im Reaktionsgemisch** |
|---|---|---|---|---|---|---|
| 1* | 1 | Pyrazol | 0,8 | 2 | | |
| | 3 | Boronat | 0,8 | 2 | 29 | 13 |
| | 2 | BuLi | 1,6 | 1 | | |
| | | | | | | |
| 2 | 1 | Pyrazol | 0,64 | 2,5 | | |
| | 3 | Boronat | 0,8 | 2 | 61 | 5,5 |
| | 2 | BuLi | 3,2 | 0,5 | | |
| | | | | | | |
| 3 | 1 | Pyrazol | 0,59 | 2,7 | | |
| | 3 | Boronat | 0,8 | 2 | **66** | 2 |
| | 2 | BuLi | 5,3 | 0,3 | | |
| | | | | | | |
| 4 | 1 | Pyrazol | 0,57 | 2,8 | | |
| | 3 | Boronat | 0,8 | 2 | 51 | 0,6 |
| | 2 | BuLi | 8 | 0,2 | | |

| | | | | | | |
|---|---|---|---|---|---|---|
| * Vergleichsbeispiel, nicht erfinderisch | | | | | | |

Bei der Verwendung der 1,6 M (15 Gew.-%igen) BuLi-Lösung in Hexan liegt ein relativ hoher Hexananteil von 17 % im Reaktionsgemisch vor. Die Produktausbeute von 29 % ist unbefriedigend und sie liegt unter dem Vergleichswert der Batchreaktion (51 %). Bei einer Steigerung der BuLi-Konzentration auf 3,2 und 5,3 M (entspr. 29 bzw. 49 Gew.-%) werden sehr deutlich erhöhte Ausbeuten von 61 bzw. 66 % beobachtet. Bei einer weiteren Steigerung der BuLi-Konzentration auf 8 M (73 Gew.-%) wird ein leichter Einbruch bei der Produktausbeute registriert, sie liegt aber immer noch mit der Batchfahrweise gleichauf.

Beim Einsatz der 1,6 M BuLi-Lösung wurde beobachtet, dass das Reaktionsgemisch vor dem Quenchen deutlich trübe war (es waren Feststoffe ausgefallen), während beim Einsatz der höherkonzentrierten BuLi-Lösungen homogene, klare Lösungen vorlagen.

### Beispiel 2:

### Lithium-Halogen Austausch an 5-Brompyrimidin mit anschließender Addition an Bis(4-chlorphenyl)keton

Der Lithium-Bromaustausch von 5-Brompyrimidin (Bromid) wird im Batchansatz bei -95 °C durchgeführt. Unter Verwendung der 1,6 M Lösung von Butyllithium in Hexan liegt die Ausbeute bei 34 % (H. M. Taylor, C.D. Jones, J.D. Davenport, K.S. Hirsch, T.J. Kress, D. Weaver, J. Med. Chem. 1987, 30, 1359-65, see table I, ex. 1).

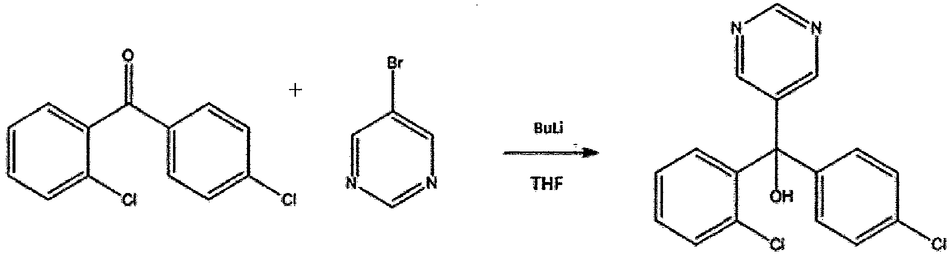

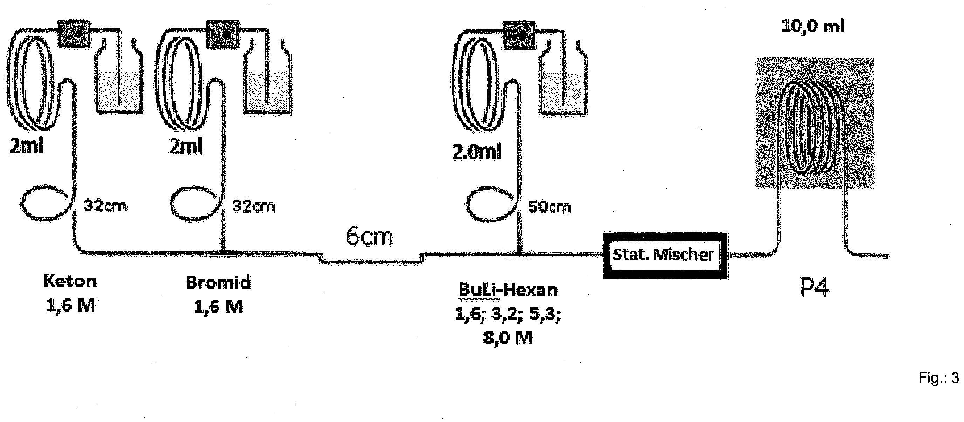

Die Umsetzung im Vapourtec R2/R4 (Fig. 3) wurde wie folgt durchgeführt: drei Dosierloops mit je 2 ml Volumen wurden mit den Startmaterialien gefüllt. Alle Komponenten wurden als THF-haltige Lösungen eingesetzt (Details s.u. Tabelle). Verschieden konzentrierte BuLi-Lösungen wurden vor dem Einfüllen in den loop mit THF auf das gewünschte Volumen von 2 ml verdünnt. Alle Startmaterialien wurden im molaren 1:1:1 - Verhältnis eingesetzt.

Die beiden Substratströme des Bis(4-chlorphenyl)ketons (Keton) und des Bromids wurden mittels T-Stück vereinigt und gemischt und dann wurde die BuLi-Lösung zugegeben. Die vereinigten Ströme wurden in einen statischen Mischer gepumpt und dort intensiv gemischt. Die Mischung wurde dann in ein Verweilzeitmodul P4 überführt, in dem die eigentliche Reaktion stattfand. Sowohl der statische Mischer als auch das Verweilzeitmodul wurden mittels Trockeneis/Aceton-Bad auf -78 °C gekühlt. Der aus dem Verweilzeitmodul fließende Produktstrom wurde mit einer gesättigten Ammoniumchloridlösung gequencht. Aliquots wurden mittels HPLC-Analytik auf Umsatz geprüft.

In der folgenden Tabelle werden die Reaktionsergebnisse festgehalten:

| **Experiment Nummer** | **Loop** | **Startmaterial** | **Konzentration (mol/l)** | **Loop Volumen (ml)** | **Ausbeute (%)** | **Gew% Hexan im Rk.Gemisch** |
|---|---|---|---|---|---|---|
| 1* | 1 | Keton | 1,6 | 2 | 22 | |
| | 2 | Bromid | 1,6 | 2 | | 23 |
| | 3 | BuLi | 1,6 | 2 | | |
| | | | | | | |
| 2 | 1 | Keton | 1,6 | 2 | 34 | |
| | 2 | Bromid | 1,6 | 2 | | 9 |
| | 3 | BuLi | 3,2** | 2 | | |
| | | | | | | |
| 3 | 1 | Keton | 1,6 | 2 | 42 | |
| | 2 | Bromid | 1,6 | 2 | | 4 |
| | 3 | BuLi | 5,3** | 2 | | |
| | | | | | | |
| 4 | 1 | Keton | 1,6 | 2 | 31 | |
| | 2 | Bromid | 1,6 | 2 | | 1 |
| | 3 | BuLi | 8** | 2 | | |

| | | | | | | |
|---|---|---|---|---|---|---|
| *Vergleichsexperiment, nicht erfinderisch; ** eingesetzte BuLi/Hexan-Konzentration, mit THF auf ein Volumen von 2 ml verdünnt | | | | | | |

Beim Einsatz der verdünnten 1,6 molaren BuLi-Lösung wird eine sehr geringe Produktausbeute von 22 % beobachtet. Mit Steigerung der BuLi-Konzentration bzw. einer Verringerung des Hexananteils im Reaktionsgemisch steigt die Ausbeute deutlich an und sie liegt bei Verwendung der 5,3 molaren (49 Gew.-%) Lösung mit 42 % deutlich über dem Ergebnis der Batch-Umsetzung (34 %).

## Patentansprüche

1. Verfahren zur CC-Bindungsbildung unter Verwendung von Organolithiumverbindungen unter kontinuierlichen Flußbedingungen in einem Mikro- oder Mesoreaktorsystem, **dadurch gekennzeichnet, dass** ein organisches Substrat in Gegenwart eines Donorlösungsmittels mit einer Alkyllithiumverbindung zu einem Li-Intermediat umgesetzt wird, das *in situ* oder anschließend in einem zweiten Reaktionsschritt mit einem Elektrophil zu einem organischen Folgeprodukt reagiert werden kann,
wobei die Organolithiumverbindung RLi als Lösung in einem Kohlenwasserstoff oder Kohlenwasserstoffgemisch verwendet wird und die RLi-Konzentration mindestens 3 M, bevorzugt mindestens 4 M beträgt.

2. Verfahren nach Anspruch 1, **dadurch gekennzeichnet, dass** die Organolithiumverbindung ausgewählt ist aus Alkyllithiumverbindungen RLi mit R = Alkylgruppe mit 2 - 12 C-Atomen.

3. Verfahren nach Anspruch 1 oder 2, **dadurch gekennzeichnet, dass** als Organolithiumverbindung Butyllithium oder Hexyllithium verwendet wird und dass die Butyllithium-Konzentration mindestens 27 Gew.-% oder die Hexyllithium-Konzentration mindestens 39 Gew.-% beträgt.

4. Verfahren nach Anspruch 3, **dadurch gekennzeichnet, dass** die Butyllithium-Konzentration mindestens 36 Gew.-% oder die Hexyllithium-Konzentration mindestens 53 Gew.-% beträgt.

5. Verfahren nach Anspruch 1 bis 3, **dadurch gekennzeichnet, dass** die Organolithiumkonzentration im Bereich 3 - 8 M liegt.

6. Verfahren nach Anspruch 5, **dadurch gekennzeichnet, dass** die Organolithiumkonzentration im Bereich 3,5 - 7 M liegt.

7. Verfahren nach Anspruch 1 bis 6, **dadurch gekennzeichnet, dass** die Organolithiumverbindung als eine Lösung in einem Kohlenwasserstofflösungsmittel vorliegt, welche bevorzugt Hexane, Heptane, Octane, Toluol, Ethylbenzol, Cumol und/oder Xylole enthält.

8. Verfahren nach Anspruch 1 bis 7, **dadurch gekennzeichnet, dass** das Donorlösungsmittel ausgewählt ist aus der Gruppe Ether, Amine, Sulfoxide, Phosphortriamide.

9. Verfahren nach Anspruch 8, **dadurch gekennzeichnet, dass** als Donorlösungsmittel Dimethylether, Diethylether, Dibutylether, Cyclopentylmethylether, Methyl-tert-butylether, Methyl-tert-amylether, Tetrahydrofuran, 2-Methyltetrahydrofuran, Tetrahydropyran, 4-Methyl-tetrahydropyran, 1,2-Dimethoxymethan sowie höhere Glymes; Ammoniak, Trimethylamin, Triethylamin, Tributylamin, Tetramethylethylendiamin, Bis(2-dimethylaminoethyl)methylamin, Hexamethylphosphorsäuretriamid, Dimethylsulfoxid, N-Methyl-2-pyrrolidon, Dimethylacetamid, 1,3-Dimethyl-3,4,5,6-tetrahydro-2(1H)-pyrimidinon oder eine beliebige Mischung daraus eingesetzt wird.

10. Verfahren nach Anspruch 1 bis 9, **dadurch gekennzeichnet, dass** der Gewichtsanteil von Kohlenwasserstofflösungsmitteln ohne Berücksichtigung des aus der Organolithiumverbindung bei der Reaktion gegebenenfalls gebildeten Alkans RH bzw. Halogenids R-Hal (Hal = Cl, Br oder I) im Reaktionsgemisch nach Vereinigung der Komponenten Organolithiumlösung, dem Donorlösungsmittel, dem Substrat und dem Elektrophil und vor der Aufarbeitung maximal 11 Gew.-% beträgt.

11. Verfahren nach Anspruch 10, **dadurch gekennzeichnet, dass** der Gewichtsanteil von Kohlenwasserstofflösungsmitteln maximal 8 Gew.% beträgt.

12. Verfahren nach Anspruch 1 bis 11, **dadurch gekennzeichnet, dass** als Elektrophil Carbonylverbindungen ausgewählt aus der Gruppe bestehend aus Aldehyden, Ketonen, Carbonsäureestern, Carbonsäureamiden oder Nitrile, Imine, Halogene, Halogenverbindungen, Disulfide sowie Wasser eingesetzt werden.

## Claims

1. A method for CC bond formation using organolithium compounds under continuous flow conditions in a micro or mesoreactor system, **characterized in that** an organic substrate is reacted in the presence of a donor solvent with an alkyl lithium compound to form a Li intermediate, which can be reacted *in situ* or subsequently in a second reaction step with an electrophile to form an organic secondary product, the organolithium compound RLi being used as a solution in a hydrocarbon or hydrocarbon mixture, and the RLi concentration being at least 3 M, preferably at least 4 M.

2. The method according to claim 1, **characterized in that** the organolithium compound is selected from alkyllithium compounds RLi where R = alkyl group having 2 - 12 C atoms.

3. The method according to claim 1 or 2, **characterized in that** butyllithium or hexyllithium is used as the organolithium compound and that the butyllithium concentration is at least 27% by weight or the hexyllithium concentration is at least 39% by weight.

4. The method according to claim 3, **characterized in that** the butyllithium concentration is at least 36% by weight or the hexyllithium concentration is at least 53% by weight.

5. The method according to claim 1 to 3, **characterized in that** the organolithium concentration is in the range of 3 - 8 M.

6. The method according to claim 5, **characterized in that** the organolithium concentration is in the range of 3.5 - 7 M.

7. The method according to claim 1 to 6, **characterized in that** the organolithium compound is present as a solution in a hydrocarbon solvent, which preferably contains hexanes, heptanes, octanes, toluene, ethylbenzene, cumene, and/or xylenes.

8. The method according to claim 1 to 7, **characterized in that** the donor solvent is selected from the group of ethers, amines, sulfoxides, phosphorus triamides.

9. The method according to claim 8, **characterized in that** dimethyl ether, diethyl ether, dibutyl ether, cyclopentyl methyl ether, methyl tert-butyl ether, methyl tert-amyl ether, tetrahydrofuran, 2-methyltetrahydrofuran, tetrahydropyran, 4-methyltetrahydropyran, 1,2-dimethoxymethane and higher glymes; ammonia, trimethylamine, triethylamine, tributylamine, tetramethylethylene diamine, bis(2-dimethylaminoethyl)methylamine, hexamethylphosphoric acid triamide, dimethyl sulfoxide, N-methyl-2-pyrrolidone, dimethylacetamide, 1,3-dimethyl-3,4,5,6-tetrahydro-2(1H)-pyrimidinone or any mixture thereof is used as donor solvent.

10. The method according to claim 1 to 9, **characterized in that** the weight proportion of hydrocarbon solvents, without taking into account the alkane RH or halide R-Hal (Hal = Cl, Br, or I), respectively, optionally formed from the organolithium compound in the reaction in the reaction mixture after combining the organolithium solution, the donor solvent, the substrate, and the electrophile components and before workup is at most 11% by weight.

11. The method according to claim 10, **characterized in that** the weight proportion of hydrocarbon solvents is a maximum 8% by weight.

12. The method according to claim 1 to 11, **characterized in that** carbonyl compounds selected from the group consisting of aldehydes, ketones, carboxylic acid esters, carboxamides or nitriles, imines, halogens, halogen compounds, disulfides, and water are used as electrophile.

## Revendications

1. Procédé de formation de liaisons C-C avec utilisation de composés organo-lithiens, dans des conditions d'écoulement continu dans un système de microréacteur ou de mésoréacteur, **caractérisé en ce qu'**on fait réagir un substrat organique avec un composé de type alkyl-lithium, en présence d'un solvant donneur, ce qui donne un intermédiaire lithié qu'on peut faire réagir, in situ ou ultérieurement dans une deuxième étape de réaction, avec un électrophile pour obtenir un produit organique résultant,
étant entendu que le composé organo-lithien R-Li est utilisé en solution dans un hydrocarbure ou un mélange d'hydrocarbures et que la concentration de R-Li vaut au moins 3 M, et de préférence au moins 4 M.

2. Procédé conforme à la revendication 1, **caractérisé en ce que** le composé organo-lithien est choisi parmi les composés de type alkyl-lithium de formule R-Li dans laquelle R représente un groupe alkyle comportant de 2 à 12 atomes de carbone.

3. Procédé conforme à la revendication 1 ou 2, **caractérisé en ce qu'**on utilise, en tant que composé organo-lithien, du butyl-lithium ou de l'hexyl-lithium, et **en ce que** la concentration de butyl-lithium vaut au moins 27 % en poids ou que la concentration d'hexyl-lithium vaut au moins 39 % en poids.

4. Procédé conforme à la revendication 3, **caractérisé en ce que** la concentration de butyl-lithium vaut au moins 36 % en poids ou que la concentration d'hexyl-lithium vaut au moins 53 % en poids.

5. Procédé conforme à l'une des revendications 1 à 3, **caractérisé en ce que** la concentration de composé organo-lithien se situe dans l'intervalle allant de 3 à 8 M.

6. Procédé conforme à la revendication 5, **caractérisé en ce que** la concentration de composé organo-lithien se situe dans l'intervalle allant de 3,5 à 7 M.

7. Procédé conforme à l'une des revendications 1 à 6, **caractérisé en ce que** le composé organo-lithien se présente sous forme d'une solution dans un solvant hydrocarboné, lequel contient de préférence de l'hexane, de l'heptane, de l'octane, du toluène, de l'éthyl-benzène, du cumène et/ou des xylènes.

8. Procédé conforme à l'une des revendications 1 à 7, **caractérisé en ce que** le solvant donneur est choisi dans l'ensemble formé par les éthers, amines, sulfoxydes et phosphotriamides.

9. Procédé conforme à la revendication 8, **caractérisé en ce que** l'on utilise, en tant que solvant donneur, du diméthyl-éther, du diéthyl-éther, du dibutyl-éther, du cyclopentyl-méthyl-éther, du méthyl-tertio-butyl-éther, du méthyl-tertioamyl-éther, du tétrahydrofurane, du 2-méthyl-tétrahydrofurane, du tétrahydropyrane, du 4-méthyl-tétrahydropyrane, du 1,2 diméthoxy-éthane, ainsi que des glymes supérieurs ; de l'ammoniac, de la triméthyl-amine, de la triéthyl-amine, de la tributyl-amine, de la tétraméthyl-éthylènediamine, de la bis(2-diméthylamino-éthyl)-méthyl-amine, de l'hexaméthyl-phosphotriamide, du diméthyl-sulfoxyde, de la N-méthyl-2-pyrrolidone, du diméthyl-acétamide, de la 1,3-diméthyl-3,4,5,6-tétrahydro-(2H)-pyrimidinone, ou un mélange de n'importe lesquels de ceux-ci.

10. Procédé conforme à l'une des revendications 1 à 9, **caractérisé en ce que** la proportion pondérale de solvants hydrocarbonés, compte non tenu de l'alcane R-H ou de l'halogénure R-Hal (où Hal représente Cl, Br ou I) éventuellement formé à partir du composé organo-lithien lors de la réaction, dans le mélange réactionnel obtenu après la réunion des constituants que sont la solution d'organo-lithien, le solvant donneur, le substrat et l'électrophile, et avant le traitement, vaut au maximum 11 % en poids.

11. Procédé conforme à la revendication 10, **caractérisé en ce que** ladite proportion pondérale de solvants hydrocarbonés vaut au maximum 8 % en poids.

12. Procédé conforme à l'une des revendications 1 à 11, **caractérisé en ce qu'**on utilise, en tant qu'électrophile, des composés carbonylés choisis dans l'ensemble formé par les aldéhydes, cétones, esters d'acide carboxylique et amides d'acide carboxylique, ou des nitriles, des imines, des halogènes, des composés halogénés, des disulfures, ainsi que de l'eau.
